# EUROPEAN PATENT SPECIFICATION

(11) **EP 3 242 195 B1**
(45) Date of publication and mention of the grant of the patent: **28.04.2021**
(21) Application number: 15868671.7
(22) Date of filing: 05.11.2015
(51) Int. Cl.: G06F 21/31, G06F 3/0481, H04W 88/02, H04W 12/08, G05B 19/042, H04L 12/64, H04W 12/06, G05B 15/02

(54) **CONTROL IMPLEMENTATION METHOD AND APPARATUS FOR INTELLIGENT HARDWARE DEVICE**
STEUERUNGSIMPLEMENTIERUNGSVERFAHREN UND -VORRICHTUNG FÜR INTELLIGENTE HARDWARE-VORRICHTUNG
PROCÉDÉ ET APPAREIL DE MISE EN UVRE DE COMMANDE POUR UN DISPOSITIF MATÉRIEL INTELLIGENT

(30) Priority: 31.12.2014 CN 201410856491
(43) Date of publication of application: 08.11.2017
(73) Proprietor: Xiaomi Inc., Beijing 100085 (CN)
(72) Inventor: KANGSHANG, Mingxue, Beijing 100085 (CN); WANG, Ying, Beijing 100085 (CN); GAO, Chengxing, Beijing 100085 (CN)
(74) Representative: Cabinet Beau de Loménie
(86) International application number: PCT/CN2015/093857
(87) International publication number: WO 2016/107282

(56) References cited:
- WO-A1-2014/155196
- CN-A- 102 984 603
- CN-A- 103 164 143
- CN-A- 103 763 413
- CN-A- 104 503 688
- US-A1- 2010 306 718
- US-A1- 2011 283 241

## Description

### TECHNICAL FIELD

The present invention relates to the field of Internet technology, and more particularly, to a method and an apparatus for implementing control of a smart hardware device.

### BACKGROUND

With the rapid development of home intelligent technologies, smart home devices have begun to enter into people's life, and smart phones become a center of intelligent control. In related arts, control on the smart home device is realized by installing a smart hardware application (app) on the smart phone. When a user wants to control one particular smart home device, in the case that a screen of the smart phone has been locked, the user needs to unlock the screen of the smart phone first, find a corresponding app on a desktop of the smart phone, and then click the app to enter into a user interface of the app, and control the smart home device by performing related operations on the user interface. Thereby, for the user, control on the smart home device is still tedious in operation, which reduces the user experience in operation control on the smart home device.

US2011/283241 A1, US2010/306718 A1 and WO2014/155196 A1 disclose relevant prior art.

### SUMMARY

The scope of the invention is defined by the appended independent claims.

In order to overcome problems existed in related arts, the embodiments of the present invention provide a method and an apparatus for implementing control of a smart hardware device, so as to simplify control operation on the smart hardware device by the user.

According to a first aspect of embodiments of the present invention, there is provided a method for implementing control of a smart hardware device, which may be implemented by a terminal device, including:
in a lock screen state, when it is determined that a user performs a first preset operation on a control key on a lock screen interface of the terminal device, acquiring related information of at least one smart hardware device via a preset smart home Internet of Things protocol and displaying the related information on a control interface; and
when it is detected that the user controls a second preset operation related to a smart hardware device on the control interface, performing control corresponding to the second preset operation on the smart hardware device via the smart home Internet of Things protocol.

In one embodiment, the first preset operation is a long-press operation on the control key by the user, the method may further include:
monitoring whether the user long-presses the control key; and
if a long-press event on the control key is monitored, determining that the user performs the first preset operation on the control key on the lock screen interface of the terminal device.

In one embodiment, the first preset operation is an operation of clicking the control key by the user, the method may further include:
monitoring whether the user clicks the control key; and
if a click event on the control key is monitored, determining that the user performs the first preset operation on the control key on the lock screen interface of the terminal device.

In one embodiment, the first preset operation is a slide operation on the control key according to a set direction, the method may further include:
determining a direction of sliding the control key by the user; and
if the direction of sliding the control key is consistent with the set direction, determining that the user performs the first preset operation on the control key on the lock screen interface of the terminal device.

In one embodiment, the preset smart home Internet of Things protocol is a MiHome protocol.

In one embodiment, acquiring related information of at least one smart hardware device via the preset smart home Internet of Things protocol and displaying the related information on the control interface may include:
determining at least one smart hardware application on the terminal device via the preset smart home Internet of Things protocol;
acquiring a current operating state of at least one smart hardware device controlled by the at least one smart hardware application via the preset smart home Internet of Things protocol; and
displaying the at least one smart hardware device and the operating state corresponding to each smart hardware device on the control interface.

In one embodiment, performing control corresponding to the second preset operation on the smart hardware device may include:
determining an operation type of the second preset operation;
if the operation type indicates that the user clicks a smart hardware device on the control interface, determining according to a security attribute of the lock screen whether a user interface of the smart hardware application corresponding to the smart hardware device is called via the smart home Internet of Things protocol; and
if the operation type indicates that the user operates a control shortcut associated with a smart hardware device on the control interface, according to an operation on the control shortcut, implementing control on the smart hardware device via the smart home Internet of Things protocol.

In one embodiment, determining according to the security attribute of the lock screen whether the user interface of the smart hardware application corresponding to the smart hardware device is called via the smart home Internet of Things protocol may include:
if the security attribute of the lock screen indicates that no password is set for the lock screen by the user, determining that the user interface of the smart hardware application corresponding to the smart hardware device is called;
if the security attribute of the lock screen indicates that a password is set for the lock screen by the user, displaying a pop-up page to receive user input of the password ; and
after receiving the user input of the password on the pop-up page, determining that the user interface of the smart hardware application corresponding to the smart hardware device is called via the smart home Internet of Things protocol.

In one embodiment, the method may further include:
displaying the user interface of the smart hardware application on the lock screen interface; and
controlling the smart hardware device on the user interface of the smart hardware application.

In one embodiment, controlling the smart hardware device on the user interface of the smart hardware application may include:
detecting an operation instruction on the user interface of the smart hardware application by the user; and
sending the operation instruction to the smart hardware device via the smart home Internet of Things protocol.

In one embodiment, displaying the related information on the control interface may include:
determining display parameters of the control interface; and
displaying the control interface on the lock screen interface according to the display parameters.

According to a second aspect of embodiments of the present invention, there is provided an apparatus for implementing control of a smart hardware device, which may be included in a terminal device, including:
an acquisition display module configured to, in a lock screen state, when it is determined that a user performs a first preset operation on a control key on a lock screen interface of the terminal device, acquire related information of at least one smart hardware device via a preset smart home Internet of Things protocol and display the related information on a control interface; and
an operation control module configured to, when it is detected that the user controls a second preset operation related to a smart hardware device on the control interface displayed by the acquisition display module, perform control corresponding to the second preset operation on the smart hardware device via the smart home Internet of Things protocol.

In one embodiment, the first preset operation is a long-press operation on the control key by the user, the apparatus may further include:
a first monitoring module configured to monitor whether the user long-presses the control key; and
a first determination module is configured to, if a long-press event on the control key is monitored by the first monitoring module, determine that the user performs the first preset operation on the control key on the lock screen interface of the terminal device.

In one embodiment, the first preset operation is an operation of clicking the control key by the user, the apparatus may further include:
a second monitoring module configured to monitor whether the user clicks the control key; and
a second determination module configured to, if a click event on the control key is monitored by the second monitoring module, determine that the user performs the first preset operation on the control key on the lock screen interface of the terminal device.

In one embodiment, the first preset operation is a slide operation on the control key according to a set direction, the apparatus may further include:
a third determination module configured to determine a direction of sliding the control key by the user; and
a fourth determination module configured to, if the third determination module determines that the direction of sliding the control key is consistent with the set direction, determine that the user performs the first preset operation on the control key on the lock screen interface of the terminal device.

In one embodiment, the preset smart home Internet of Things protocol is a MiHome protocol.

In one embodiment, the acquisition display module may include:
a first determination submodule configured to determine at least one smart hardware application on the terminal device via the preset smart home Internet of Things protocol;
an acquisition submodule configured to acquire a current operating state of at least one smart hardware device controlled by the at least one smart hardware application determined by the first determination submodule via the preset smart home Internet of Things protocol; and
a display submodule configured to display the at least one smart hardware device and the operating state corresponding to each smart hardware device acquired by the acquisition submodule on the control interface.

In one embodiment, the operation control module may include:
a second determination submodule configured to determine an operation type of the second preset operation;
a third determination submodule configured to, if the second determination submodule determines that the operation type indicates that the user clicks a smart hardware device on the control interface, determine according to a security attribute of the lock screen whether a user interface of the smart hardware application corresponding to the smart hardware device is called via the smart home Internet of Things protocol; and
a control submodule configured to, if the second determination submodule determines that the operation type indicates that the user operates a control shortcut associated with a smart hardware device on the control interface, according to an operation on the control shortcut, implement control on the smart hardware device via the smart home Internet of Things protocol.

In one embodiment, the third determination submodule may include:
a fourth determination submodule configured to, if the security attribute of the lock screen indicates that no password is set for the lock screen by the user, determine that the user interface of the smart hardware application corresponding to the any one smart hardware device is called;
a pop-up submodule configured to, if the security attribute of the lock screen indicates that a password is set for the lock screen by the user, display a pop-up page to receive user input of the password; and
a fifth determination submodule configured to, after receiving the user input of the password on the pop-up page, determine that the user interface of the smart hardware application corresponding to the smart hardware device is called via the smart home Internet of Things protocol.

In one embodiment, the apparatus may further include:
an interface display module configured to display the user interface of the smart hardware application determined to call by the third determination submodule on the lock screen interface; and
an interface control module configured to control the smart hardware device on the user interface of the smart hardware application displayed by the interface display module.

In one embodiment, the interface control module may include:
a detection submodule configured to detect an operation instruction on the user interface of the smart hardware application displayed by the interface display module by the user; and
a sending submodule configured to send the operation instruction detected by the detection submodule to the any one smart hardware device via the smart home Internet of Things protocol.

In one embodiment, the acquisition display module includes:
a sixth determination submodule configured to determine display parameters of the control interface displayed by the acquisition display module, and display the control interface on the lock screen interface according to the display parameters.

According to a third aspect of embodiments of the present invention, there is provided an apparatus for implementing control of a smart hardware device, including:
a processor; and
a memory for storing instructions executable by the processor;
wherein the processor is configured to:
   in a lock screen state, when it is determined that a user performs a first preset operation on a control key on a lock screen interface of the terminal device, acquire related information of at least one smart hardware device via a preset smart home Internet of Things protocol and display the related information on a control interface; and
   when it is detected that the user controls a second preset operation related to a smart hardware device on the control interface, perform control corresponding to the second preset operation on the smart hardware device via the smart home Internet of Things protocol.

The technical solutions provided by the embodiments of the present invention may include the following advantageous effects: when the terminal device is in the lock screen state, by performing the first preset operation on the control key on the lock screen interface, related information of at least one smart hardware device can be acquired via the preset smart home Internet of Things protocol and the related information can be displayed on a control interface; by performing the second preset operation on the smart hardware device displayed on the control interface, corresponding control operation on the smart hardware device on the control interface can be realized, thus avoiding operations that the user unlocks the terminal device, and then enters into corresponding smart hardware application to control the smart hardware device, simplifying the process of control operation on the smart hardware device, and realizing convenient control on the smart hardware device in the lock screen state of the terminal device. In addition, since the embodiments of the present invention may call the smart hardware application via the smart home Internet of Things protocol, the control operation on the smart hardware device may be realized without opening the smart hardware application, thus avoiding a memory of the terminal device being long occupied by the smart hardware application, reducing memory of the terminal device, and also saving power consumption of the terminal device.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart illustrating a method for implementing control of a smart hardware device, according to an exemplary embodiment.
Fig. 1B is a diagram illustrating a control key of a terminal device displayed on a lock screen interface, according to an exemplary embodiment.
Fig. 1C is a diagram illustrating a first preset operation, according to an exemplary embodiment.
Fig. 1D is another diagram illustrating a first preset operation, according to an exemplary embodiment.
Fig. 1E is a diagram illustrating a control interface, according to an exemplary embodiment.
Fig. 2 is a flow chart illustrating a method for implementing control of a smart hardware device, according to a first exemplary embodiment.
Fig. 3 is a flow chart illustrating a method for implementing control of a smart hardware device, according to a second exemplary embodiment.
Fig. 4 is a block diagram illustrating an apparatus for implementing control of a smart hardware device, according to an exemplary embodiment.
Fig. 5 is a block diagram illustrating another apparatus for implementing control of a smart hardware device, according to an exemplary embodiment.
Fig. 6 is a block diagram illustrating a third determination submodule, according to an exemplary embodiment.
Fig. 7 is a block diagram illustrating an apparatus for implementing control of a smart hardware device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

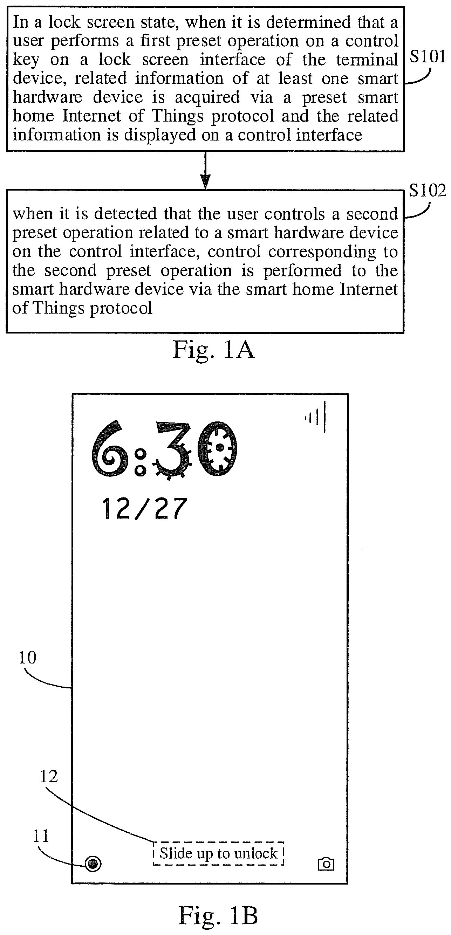

Fig. 1A is a flow chart illustrating a method for implementing control of a smart hardware device, according to an exemplary embodiment. The method for implementing control of the smart hardware device may be implemented by a terminal device, such as a smart mobile, and a tablet. As shown in Fig. 1A, the method for implementing control of the smart hardware device includes the following steps S101-S102.

In step S101, in a lock screen state, when it is determined that a user performs a first preset operation on a control key on a lock screen interface of the terminal device, related information of at least one smart hardware device is acquired via a preset smart home Internet of Things protocol and the related information is displayed on a control interface.

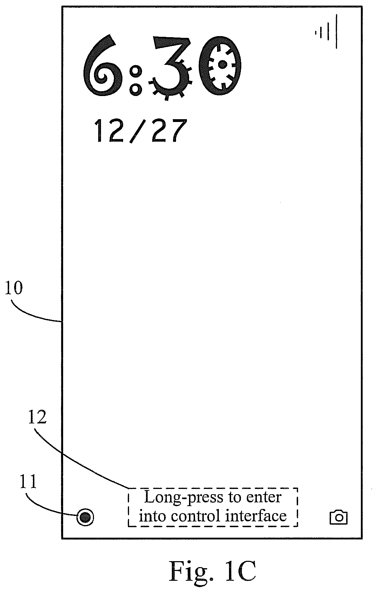

In one embodiment, as shown in Fig. 1B, a control key 11 and a prompt box 12 with "slide up to unlock" are provided on a lock screen interface 10 of a terminal device. In one embodiment, the first preset operation may be: a long-press operation on the control key 11, a click (single-click or double-click) operation on the control key 11, or a slide operation on the control key 11 according to a set direction, etc.. In one embodiment, as shown in Fig. 1C and Fig. ID, the operation on the control key 11 may be prompted through the prompt box 12, for example, "long-press to enter into control interface" or "slide right to enter into control interface", and the like displayed in the prompt box 12 may prompt how to operate the control key 11, and the user may realize the operation on the control key 11 according to the prompt of the prompt box 12.

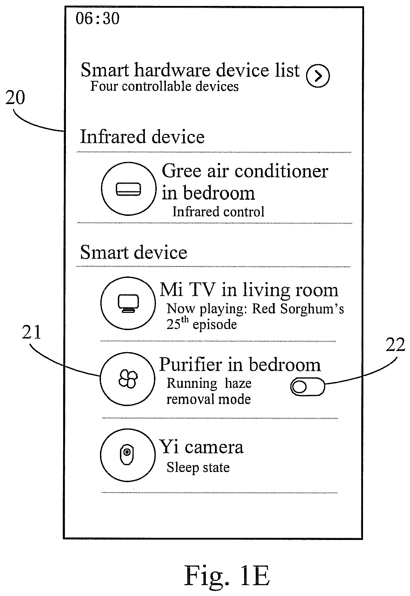

After performing the first preset operation, related information of at least one smart hardware device may be acquired via the preset smart home Internet of Things protocol and the related information may be displayed on a control interface 20, where the control interface 20 may be displayed on the lock screen interface of the terminal device. As shown in Fig. 1E, when the control interface is displayed, display parameters of the control interface are determined, and the control interface is displayed on the lock screen interface according to the display parameters. In the embodiment shown in Fig. 1E, the control interface 20 may cover the lock screen interface 10. In addition, in the embodiments of the present invention, the control interface 20 may also be displayed on the lock screen interface 10 according to the size of the display parameters. As shown in Fig. 1E, a device icon, a device name, a device current state of the smart hardware device, shortcut for controlling the smart device to perform certain operations , and an infrared device list are displayed on the control interface 20 in the list of the smart hardware device. For example, taking "purifier in bedroom" in the smart hardware device list for example, an icon 21 of the purifier is displayed on the left side of "purifier in bedroom", and a control shortcut 22 of the purifier is displayed on the right side of "purifier in bedroom", turn on or off of the purifier may be directly controlled by the control shortcut on the smart hardware device list. Furthermore, a current state "running haze removal mode" of the purifier is also displayed below the purifier. In addition, an infrared device "Gree air conditioner in bedroom" is also displayed in the smart hardware device list, and below the "Gree air conditioner in bedroom", it also shows that a current operating state of the infrared device is "Infrared control" mode.

In step S102, when it is detected that the user controls a second preset operation related to a smart hardware device on the control interface, control corresponding to the second preset operation is performed on the smart hardware device via the smart home Internet of Things protocol.

In one embodiment, as it can be seen from the smart hardware device list displayed by the control interface 20, the second preset operation may be an operation of directly clicking any smart hardware device by the user, or, the second preset operation may be an operation of clicking a control shortcut button associated with the smart hardware device. For example, the user clicks "purifier in bedroom", then the user interface of the smart hardware application corresponding to "purifier in bedroom" may be called on the control interface 20; if the user clicks the control shortcut 22 on the right side of "purifier in bedroom", turn on or off of "purifier in bedroom" may be directly controlled by the second preset operation, thus avoiding operations that the user unlocks the lock screen interface 10 of the terminal device first, and then further opens the smart hardware application of "purifier in bedroom", thereby, control of "purifier in bedroom" on the control interface 20 may be realized.

In the present embodiment, in the case that the terminal device is in the lock screen state, by performing the first preset operation on the control key on the lock screen interface, related information of at least one smart hardware device can be acquired via the preset smart home Internet of Things protocol and the related information can be displayed on a control interface; by performing the second preset operation on the smart hardware device displayed on the control interface, corresponding control operation on the smart hardware device on the control interface can be realized via the preset smart home Internet of Things protocol, thus avoiding operations that the user unlocks the terminal device, and then enters into corresponding smart hardware application to control the smart hardware device, simplifying the process of control operation on the smart hardware device, and realizing convenient control on the smart hardware device in the lock screen state of the terminal device. In addition, since the embodiments of the present invention may call the smart hardware application via the smart home Internet of Things protocol, the control operation on the smart hardware device may be realized without opening the smart hardware application, thus avoiding a memory of the terminal device being long occupied by the smart hardware application, reducing memory of the terminal device, and also saving power consumption of the terminal device.

In one embodiment, the first preset operation is a long-press operation on the control key by the user, the method for implementing control of the smart hardware device may further include:
monitoring whether the user long-presses the control key; and
if a long-press event on the control key is monitored, determining that the user performs the first preset operation on the control key on the lock screen interface of the terminal device.

In one embodiment, the first preset operation is a click operation on the control key by the user, the method for implementing control of the smart hardware device may further include:
monitoring whether the user clicks the control key; and
if a click event on the control key is monitored, determining that the user performs the first preset operation on the control key on the lock screen interface of the terminal device.

In one embodiment, the first preset operation is a slide operation on the control key according to a set direction, the method for implementing control of the smart hardware device may further include:
determining a direction of sliding the control key by the user; and
if the direction of sliding the control key is consistent with the set direction, determining that the user performs the first preset operation on the control key on the lock screen interface of the terminal device.

In one embodiment, according to the smart home Internet of Things protocol, the smart hardware application provided by a third party can be created as a standardized service through a normative interface, thereby, all hardware abiding by the same protocol can communicate and be controlled via the smart home Internet of Things protocol. The smart home Internet of Things protocol may adopt a description manner, which is consistent with the physical world, so that all smart home devices may describe their own and their own services via the same protocol, thus, a variety of hardware can be compatible with each other; through a unified call interface, the development of the third-party smart hardware application will be made easier; by using the smart home Internet of Things protocol as a center of receiving operation instructions and providing related information of the smart hardware device, the third-party smart hardware application does not need to constantly keep running in memory of the terminal, thus saving memory of the terminal device, and reducing power consumption.

In one embodiment, the preset smart home Internet of Things protocol is a MiHome protocol. In one embodiment, the MiHome protocol is a set of technical specifications, which realize that the smart hardware of the physical world is abstracted to a software example of a digital world, and the function of the hardware is abstracted to a service of the software world. In one embodiment, the terminal device can communicate with all connected smart hardware devices via the MiHome protocol, or, the smart hardware application provided by the third party may be called via the MiHome protocol, for example, calling the user interface of the smart hardware application installed on the terminal device, or, sending a control instruction to a smart air purifier, so as to open the smart air purifier, and the like.

In one embodiment, step S101 may include:
determining at least one smart hardware application on the terminal device via the preset smart home Internet of Things protocol;
acquiring a current operating state of at least one smart hardware device controlled by the at least one smart hardware application via the preset smart home Internet of Things protocol; and
displaying the at least one smart hardware device and the operating state corresponding to each smart hardware device on the control interface.

In one embodiment, step S102 may include:
determining an operation type of the second preset operation;
if the operation type indicates that the user clicks a smart hardware device on the control interface, determining, according to a security attribute of the lock screen, whether a user interface of the smart hardware application corresponding to the smart hardware device is called via the smart home Internet of Things protocol; and
if the operation type indicates that the user operates a control shortcut associated with a smart hardware device on the control interface, implementing according to an operation on the control shortcut, control the smart hardware device via the smart home Internet of Things protocol.

In one embodiment, , determining according to the security attribute of the lock screen whether the user interface of the smart hardware application corresponding to the smart hardware device is called via the smart home Internet of Things protocol may include:
if the security attribute of the lock screen indicates that no password is set for the lock screen by the user, determining that the user interface of the smart hardware application corresponding to the smart hardware device is called;
if the security attribute of the lock screen indicates that a password is set for the lock screen by the user, displaying a pop-up page to receive user input of the password ; and
after the user inputs the password on the pop-up page, determining that the user interface of the smart hardware application corresponding to the smart hardware device is called via the smart home Internet of Things protocol.

In one embodiment, the method for implementing control of the smart hardware device may further include:
displaying the user interface of the smart hardware application on the lock screen interface; and
controlling the smart hardware device on the user interface of the smart hardware application.

How to control the smart hardware device may be referred to the following embodiments.

In one embodiment, controlling the smart hardware device on the user interface of the smart hardware application may include:
detecting an operation instruction on the user interface of the smart hardware application by the user; and
sending the operation instruction to the smart hardware device via the smart home Internet of Things protocol.

In one embodiment, the method for implementing control of the smart hardware device may further include:
determining display parameters of the control interface; and
displaying the control interface on the lock screen interface according to the display parameters.

In summary, the above method provided by the embodiments of the preset invention may avoid operations that the user unlocks the terminal device, and then enters into corresponding smart hardware application to control the smart hardware device, simplifying the process of control operation on the smart hardware device, and realizing convenient control on the smart hardware device in the lock screen state of the terminal device. In addition, since the embodiments of the present invention may call the smart hardware application via the smart home Internet of Things protocol, the control operation on the smart hardware device may be realized without opening the smart hardware application, thus avoiding a memory of the terminal device being long occupied by the smart hardware application, reducing memory of the terminal device, and also saving power consumption of the terminal device.

Hereinafter, the technical solutions provided by embodiments of the present invention will be illustrated by specific embodiments.

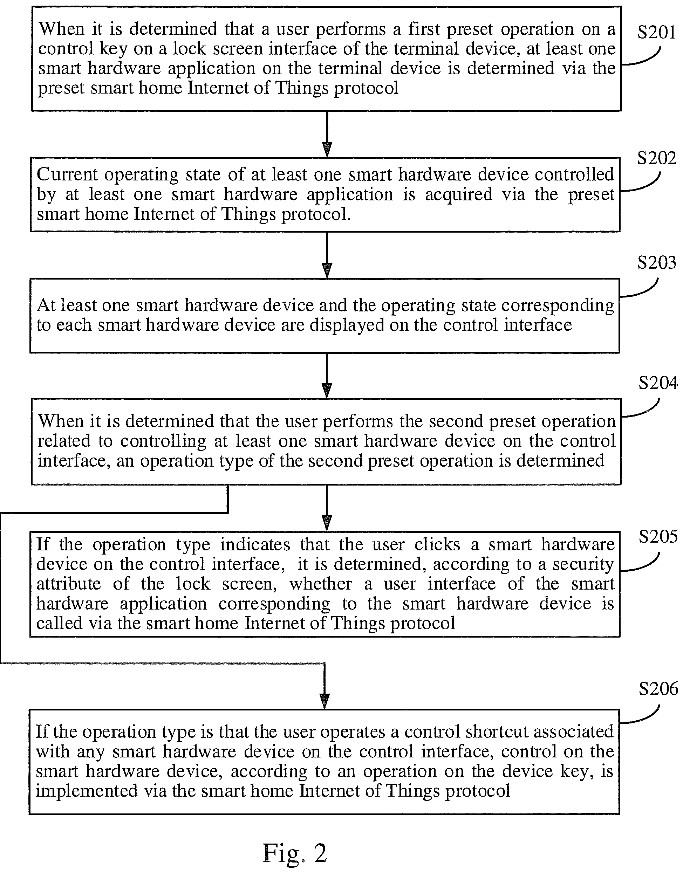

Fig. 2 is a flow chart illustrating a method for implementing control of a smart hardware device, according to a first exemplary embodiment. The present embodiment utilizes the above method provided by the embodiments of the present invention to make an exemplary illustration by taking how to control the smart hardware device on the control interface for example, wherein the smart hardware application is installed on the terminal device, and is used to control at least one smart hardware device. In the present embodiment, the related information includes: a name, a current operating state of the smart hardware device, and an icon corresponding to the smart hardware device, and the like. The embodiments of the present invention will make an exemplary illustration by referring to the above Fig. 1B to Fig. 1E. As shown in Fig. 2, the method includes the following steps.

In step S201, when it is determined that a user performs a first preset operation on a control key on a lock screen interface of the terminal device, at least one smart hardware application on the terminal device is determined via the preset smart home Internet of Things protocol.

In step 202, a current operating state of at least one smart hardware device controlled by the at least one smart hardware application is acquired via the preset smart home Internet of Things protocol.

In step S203, the at least one smart hardware device and the operating state corresponding to each smart hardware device are displayed on the control interface.

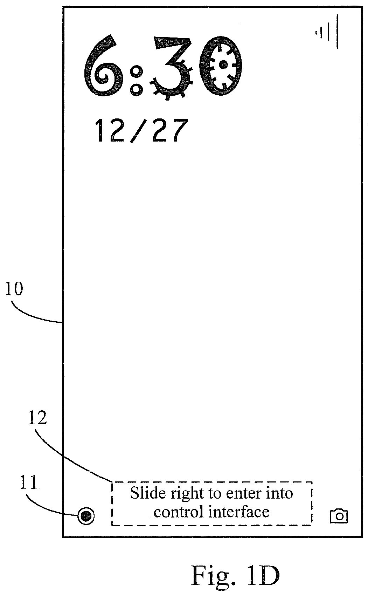

In step S201 to step S203, in one embodiment, for example, after the user performs the first preset operation on "slide right to enter into control interface" shown in the prompt box 12 of Fig. 1D, the smart hardware applications installed on the terminal device will be determined, for example, smart hardware applications "Gree air conditioner in bedroom", "Mi TV in living room", "purifier in bedroom", and "yi camera" of four smart hardware devices are installed on the terminal device. In one embodiment, one smart hardware device corresponds to one smart hardware application; in another embodiment, two or more smart hardware devices may correspond to one smart hardware application, that is, one smart hardware application can be used to control two or more smart hardware devices. In one embodiment, an Application Programming Interface (shortened in API) of the smart hardware application may be called via the smart home Internet of Things protocol, thereby, the smart hardware application installed on the terminal device may be determined. Furthermore, by calling the current state of the smart hardware device, the operating state corresponding to each smart hardware device on the control interface 20 may be determined, thus, related information (such as the smart hardware device controlled by the smart hardware application and state information related to the smart hardware device, and the like) is displayed on the control interface 20.

In step S204, when it is determined that the user performs the second preset operation related to controlling at least one smart hardware device on the control interface, an operation type of the second preset operation is determined.

In one embodiment, referring to Fig. 1E again, the second preset operation may be an operation of directly clicking any one smart hardware device on the control interface 20 by the user, or, the second preset operation may be an operation of clicking a control shortcut button associated with the smart hardware device; thereby, when it is monitored that the user clicks corresponding position on the control interface 20, the operation type of the second preset operation performed by the user will be determined, and corresponding control may be made to the smart hardware device according to the operation type.

In step S205, if the operation type indicates that the user clicks a smart hardware device on the control interface, it is determined, according to a security attribute of the lock screen, whether a user interface of the smart hardware application corresponding to the smart hardware device is called via the smart home Internet of Things protocol.

In one embodiment, if the user performs a login password authentication on the lock screen interface, the password can be characters input by a keyboard, gestures, and fingerprints. In order to ensure security privacy of the user while using the terminal device, when the user sets a login password on the lock screen interface 10 to authenticate, although the smart hardware device is displayed on the control interface 20 of the terminal device, when the user calls the user interface of the smart hardware application by clicking the smart hardware device, an identity of the user should be authenticated on a page popping up the password authentication, so as to ensure that a legitimate user of the terminal device performs a legitimate operation to the smart hardware device, and avoid an illegal operation performed by an illegal user to the smart hardware device. For example, when the user clicks "purifier in bedroom", in order to prevent the illegal operation on "purifier in bedroom" by the illegal user, such as, deliberately opening "purifier in bedroom" to waste family electricity of the legitimate user when nobody is at home, a corresponding identity authentication page will be popped up after "purifier in bedroom" is clicked, so as to authenticate the identity of the user, and after the authentication is passed, the user interface of the smart hardware application corresponding to "purifier in bedroom" is called again.

In step S206, if the operation type is that the user operates a control shortcut associated with any smart hardware device on the control interface, control on the smart hardware device, according to an operation on the control shortcut, is implemented via the smart home Internet of Things protocol.

In one embodiment, since an operation on the control shortcut associated with the smart hardware device is quick and convenient, and the operation will not bring greater loss to the legitimate user, thereby, in order to ensure that the user may quickly realize control operation on the smart hardware device, when the device key is clicked, the user can directly perform a shortcut operation to the smart hardware device through the control shortcut. For example, when the user clicks a shortcut key 22 on the right side of "purifier in bedroom", turn-on or turn-off of "purifier in bedroom" can be directly realized through the shortcut key 22.

In addition to the above advantageous effects, the present embodiment also has the following advantageous effects: by classifying the operation type of the second preset operation, the security level of the second preset operation on the control interface 20 can be differentiated, thereby, on the basis of ensuring normal operations of the legitimate user, safely and quickly controlling the smart hardware device via the smart hardware Internet of Things protocol may be realized.

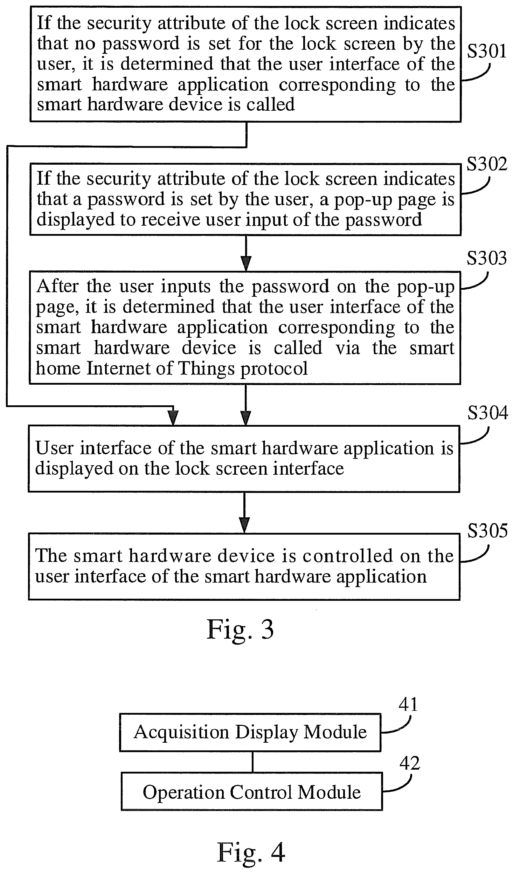

Fig. 3 is a flow chart illustrating a method for implementing control of a smart hardware device, according to a second exemplary embodiment. The present embodiment utilizes the above method provided by the embodiments of the present invention to make an exemplary illustration by taking how to determine to call the user interface of the smart hardware application corresponding to any one smart hardware device according to the security attribute of the lock screen for example. As shown in Fig. 3, the method includes the following steps.

In step 301, if the security attribute of the lock screen indicates that no password is set for the lock screen by the user, it is determined that the user interface of the smart hardware application corresponding to the any one smart hardware device is called, and step S304 is performed.

In step S302, if the security attribute of the lock screen indicates that a password is set for the lock screen by the user, a pop-up page is displayed to receive user input of the password, and step S303 is performed.

In step S303, after the user inputs the password on the pop-up page, it is determined that the user interface of the smart hardware application corresponding to the smart hardware device is called via the smart home Internet of Things protocol, and step S304 is performed.

In step S304, the user interface of the smart hardware application is displayed on the lock screen interface, and step S305 is performed.

In step S305, the smart hardware device is controlled on the user interface of the smart hardware application, the process ends.

As shown in Fig. 1E again, if the user sets a login password on the lock screen interface 10, when "purifier in bedroom" is clicked, in order to ensure privacy security of the user, a decryption page can be popped up at this time, so that the user can be able to call the user interface of the smart hardware application of "purifier in bedroom" after decrypting, and the user may control related operations of "purifier in bedroom" on the user interface of the smart hardware application, for example, an operation for adjusting purification parameters of "purifier in bedroom", and the like.

In the present embodiment, when the user wants to control the smart hardware device on the user interface of the smart hardware application, permissions of the user interface of the smart hardware application may be determined on the security attribute of the lock screen, thus ensuring that the security levels between the lock screen and the user interface of the smart hardware application are consistent, further ensuring that the legitimate user is able to normally control the smart hardware device, and avoiding the illegal operation on the smart hardware device by the illegal user.

Fig. 4 is a block diagram illustrating an apparatus for implementing control of a smart hardware device, according to an exemplary embodiment, which may be included in a terminal device. As shown in Fig. 4, the apparatus for implementing control of the smart hardware device includes:
an acquisition display module 41 configured to, in a lock screen state, when it is determined that a user performs a first preset operation on a control key on a lock screen interface of the terminal device, acquire related information of at least one smart hardware device via a preset smart home Internet of Things protocol and display the related information on a control interface; and
an operation control module 42 configured to, when it is detected that the user controls a second preset operation related to any smart hardware device on the control interface displayed by the acquisition display module, perform control corresponding to the second preset operation to the smart hardware device via the smart home Internet of Things protocol.

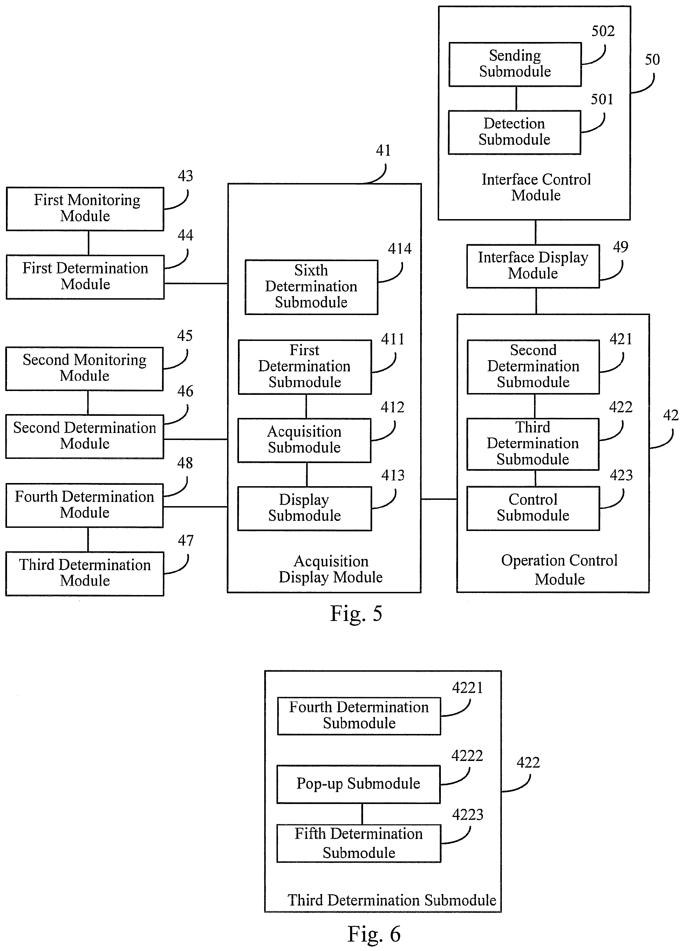

As shown in Fig. 5, the first preset operation is a long-press operation on the control key by the user, and the apparatus for implementing control of the smart hardware device may further include:
a first monitoring module 43 configured to monitor whether the user long-presses the control key; and
a first determination module 44 configured to, if a long-press event on the control key is monitored by the first monitoring module 43, determine that the user performs the first preset operation on the control key on the lock screen interface of the terminal device.

In one embodiment, the first preset operation is an operation of clicking the control key by the user, and the apparatus for implementing control of the smart hardware device may further include:
a second monitoring module 45 configured to monitor whether the user clicks the control key; and
a second determination module 46 configured to, if a click event on the control key is monitored by the second monitoring module 45, determine that the user performs the first preset operation on the control key on the lock screen interface of the terminal device.

In one embodiment, the first preset operation is a slide operation on the control key according to a set direction, and the apparatus for implementing control of the smart hardware device may further include:
a third determination module 47 configured to determine a direction of sliding the control key by the user; and
a fourth determination module 48 configured to, if the third determination module 47 determines that the direction of sliding the control key is consistent with the set direction, determine that the user performs the first preset operation on the control key on the lock screen interface of the terminal device.

In one embodiment, the preset smart home Internet of Things protocol is a MiHome protocol.

In one embodiment, the acquisition display module 41 may include:
a first determination submodule 411 configured to determine at least one smart hardware application on the terminal device via the preset smart home Internet of Things protocol;
an acquisition submodule 412 configured to acquire a current operating state of at least one smart hardware device controlled by the at least one smart hardware application determined by the first determination submodule 411 via the preset smart home Internet of Things protocol; and
a display submodule 413 configured to display the at least one smart hardware device and the operating state corresponding to each smart hardware device acquired by the acquisition submodule 412 on the control interface.

In one embodiment, the operation control module 42 may include:
a second determination submodule 421 configured to determine an operation type of the second preset operation;
a third determination submodule 422 configured to, if the second determination submodule 421 determines that the operation type indicates that the user clicks one smart hardware device on the control interface, determine according to a security attribute of the lock screen whether a user interface of the smart hardware application corresponding to the smart hardware device is called via the smart home Internet of Things protocol; and
a control submodule 423 configured to, if the second determination submodule 421 determines that the operation type indicates that the user operates a control shortcut associated with a smart hardware device on the control interface, according to an operation to the control shortcut, implement control on the smart hardware device via the smart home Internet of Things protocol.

As shown in Fig. 6, in one embodiment, the third determination submodule 422 may include:
a fourth determination submodule 4221 configured to, if the security attribute of the lock screen indicates that no password is set for the lock screen by the user, determine that the user interface of the smart hardware application corresponding to the smart hardware device is called;
a pop-up submodule 4222 configured to, if the security attribute of the lock screen indicates that a password is set for the lock screen by the user, display a pop up page to receive user input of the password; and
a fifth determination submodule 4223 configured to, after receiving the user input of the password on the pop-up page popped up by the pop-up submodule 4222, determine that the user interface of the smart hardware application corresponding to the smart hardware device is called via the smart home Internet of Things protocol.

In one embodiment, the apparatus for implementing control of the smart hardware device may further include:
an interface display module 49 configured to display the user interface of the smart hardware application determined to call by the third determination submodule 422 on the lock screen interface; and
an interface control module 50 configured to control the smart hardware device on the user interface of the smart hardware application displayed by the interface display module 49.

In one embodiment, the interface control module 50 may include:
a detection submodule 501 configured to detect an operation instruction on the user interface of the smart hardware application displayed by the interface display module by the user; and
a sending submodule 502 configured to send the operation instruction detected by the detection submodule 501 to the smart hardware device via the smart home Internet of Things protocol.

In one embodiment, the apparatus for implementing control of the smart hardware device may further include:
a sixth determination submodule 414 configured to determine display parameters of the control interface displayed by the acquisition display module 41; and display the control interface on the lock screen interface according to the display parameters.

With respect to the devices in the above embodiments, the specific manners for performing operations for individual modules therein have been described in detail in the embodiments regarding the related methods, which will not be elaborated herein.

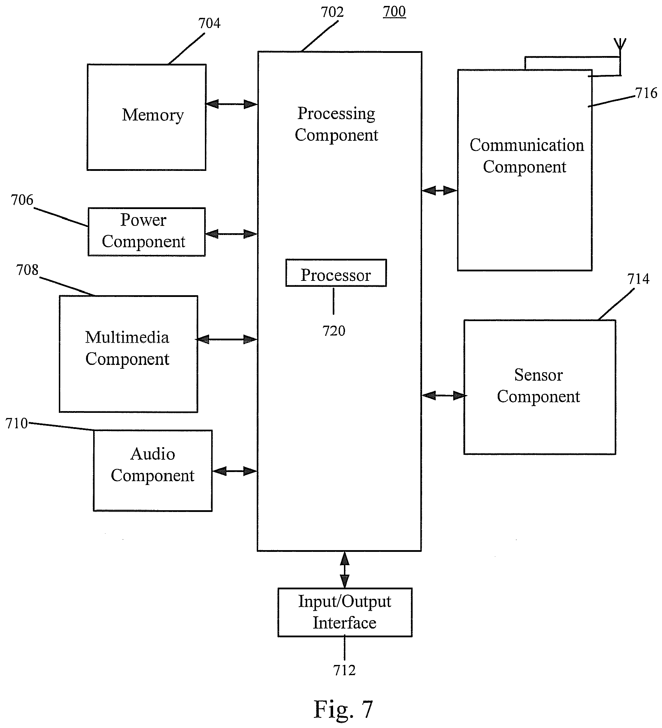

Fig. 7 is a block diagram of an apparatus for implementing control of a smart hardware device, according to an exemplary embodiment. For example, the apparatus 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be realized using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be realized as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be realized based on a radio frequency identification (RFID) technology, an infrared data association (IrDA) technology, an ultra-wideband (UWB) technology, a Bluetooth (BT) technology, and other technologies.

In exemplary embodiments, the device 700 may be realized with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

## Claims

1. A method for implementing control of a smart hardware device, which is implemented in a terminal device, the method comprises:
in a lock screen state, when it is determined that a user performs a first preset operation on a control key on a lock screen interface of the terminal device, acquiring (S101) related information of at least one smart hardware device via a preset smart home Internet of Things protocol and displaying the related information on a control interface; and
when it is detected that the user controls a second preset operation related to the smart hardware device on the control interface, performing (S102) control corresponding to the second preset operation on the smart hardware device via the smart home Internet of Things protocol,
wherein performing control corresponding to the second preset operation on the smart hardware device comprises:
determining (S204) an operation type of the second preset operation;
if the operation type indicates that the user clicks a smart hardware device icon on the control interface, determining (S205) according to a security attribute of the lock screen whether a user interface of the smart hardware application corresponding to the smart hardware device is called via the smart home Internet of Things protocol; and
if the operation type indicates that the user operates a control shortcut associated with the smart hardware device on the control interface, implementing (S206) according to an operation on the control shortcut, control on the smart hardware device via the smart home Internet of Things protocol.

2. The method according to claim 1, wherein the first preset operation is a long-press operation on the control key by the user, the method further comprises:
monitoring whether the user long-presses the control key; and
if a long-press event on the control key is monitored, determining that the user performs the first preset operation on the control key on the lock screen interface of the terminal device.

3. The method according to claim 1, wherein the first preset operation is a click operation on the control key by the user, the method further comprises:
monitoring whether the user clicks the control key; and
if a click event on the control key is monitored, determining that the user performs the first preset operation to the control key on the lock screen interface of the terminal device.

4. The method according to claim 1, wherein the first preset operation is a slide operation on the control key according to a set direction, the method further comprises:
determining a direction of sliding the control key by the user; and
if the direction of sliding the control key is consistent with the set direction, determining that the user performs the first preset operation on the control key on the lock screen interface of the terminal device.

5. The method according to claim 1, wherein acquiring (S101) related information of at least one smart hardware device via the preset smart home Internet of Things protocol and displaying the related information on the control interface comprises:
determining (S201) at least one smart hardware application on the terminal device via the preset smart home Internet of Things protocol;
acquiring (S202) a current operating state of at least one smart hardware device controlled by the at least one smart hardware application via the preset smart home Internet of Things protocol; and
displaying (S203) the at least one smart hardware device icon and the operating state corresponding to each smart hardware device on the control interface.

6. The method according to claim 1, wherein determining according to the security attribute of the lock screen whether the user interface of the smart hardware application corresponding to the smart hardware device is called via the smart home Internet of Things protocol comprises:
if the security attribute of the lock screen indicates that no password is set for the lock screen by the user, determining (S301) that the user interface of the smart hardware application corresponding to the smart hardware device is called;
if the security attribute of the lock screen indicates that a password is set for the lock screen by the user, display (S302) a pop up page to receive user input of the password; and
after receiving the user input of the password on the pop-up page, determining (S303) that the user interface of the smart hardware application corresponding to the smart hardware device is called via the smart home Internet of Things protocol.

7. The method according to claim 1, wherein the method further comprises:
displaying (S304) the user interface of the smart hardware application on the lock screen interface; and
controlling (S305) the smart hardware device on the user interface of the smart hardware application.

8. The method according to claim 7, wherein controlling the smart hardware device on the user interface of the smart hardware application comprises:
detecting an operation instruction on the user interface of the smart hardware application by the user; and
sending the operation instruction to the smart hardware device via the smart home Internet of Things protocol.

9. The method according to claim 1, wherein displaying the related information on the control interface comprises:
determining display parameters of the control interface; and
displaying the control interface on the lock screen interface according to the display parameters.

10. An apparatus for implementing control of a smart hardware device, which is included in a terminal device, the apparatus comprises:
an acquisition display module (41) configured to, in a lock screen state, when it is determined that a user performs a first preset operation on a control key on a lock screen interface of the terminal device, acquire related information of at least one smart hardware device via a preset smart home Internet of Things protocol and display the related information on a control interface; and
an operation control module (42) configured to, when it is detected that the user controls a second preset operation related to the smart hardware device on the control interface displayed by the acquisition display module (41), perform control corresponding to the second preset operation on the smart hardware device via the smart home Internet of Things protocol,
wherein the operation control module comprises:
a second determination submodule configured to determine an operation type of the second preset operation;
a third determination submodule configured to, if the second determination submodule determines that the operation type indicates that the user clicks a smart hardware device icon on the control interface, determine according to a security attribute of the lock screen whether a user interface of the smart hardware application corresponding to the smart hardware device is called via the smart home Internet of Things protocol; and
a control submodule configured to, if the second determination submodule determines that the operation type indicates that the user operates a control shortcut associated with the smart hardware device on the control interface, implement according to an operation to the control shortcut, control on the smart hardware device via the smart home Internet of Things protocol.

11. A storage medium readable by a computer and having recorded thereon instructions for executing the steps of a method according to any one of claims 1 to 9.

## Patentansprüche

1. Verfahren zum Implementieren der Steuerung eines intelligenten Hardwaregeräts, das in einem Endgerät implementiert ist, wobei das Verfahren umfasst:
in einem Sperrbildschirmzustand, wenn festgestellt wird, dass ein Benutzer eine erste voreingestellte Betätigung auf einer Bedientaste auf einer Sperrbildschirmschnittstelle des Endgeräts durchführt, Erfassen (S101) von zugehörigen Informationen von mindestens einem intelligenten Hardwaregerät über ein voreingestelltes Smart-Home-Internet-der-Dinge-Protokoll und Anzeigen der zugehörigen Informationen auf einer Steuerschnittstelle; und
wenn detektiert wird, dass der Benutzer eine zweite voreingestellte Betätigung in Bezug auf das intelligente Hardwaregerät auf der Steuerschnittstelle steuert, Ausführen (S102) einer Steuerung entsprechend der zweiten voreingestellten Betätigung auf dem intelligenten Hardwaregerät über das Smart-Home-Internet-der-Dinge-Protokoll,
wobei das Durchführen der Steuerung entsprechend der zweiten voreingestellten Betätigung auf dem intelligenten Hardwaregerät umfasst:
Bestimmen (S204) eines Betätigungstyps der zweiten voreingestellten Betätigung;
wenn der Betätigungstyp angibt, dass der Benutzer auf ein Symbol für ein intelligentes Hardwaregerät auf der Steuerschnittstelle klickt, Bestimmen (S205) gemäß einem Sicherheitsattribut des Sperrbildschirms, ob eine Benutzerschnittstelle einer intelligenten Hardware-Anwendung, die dem intelligenten Hardwaregerät entspricht, über das Smart-Home-Internet-der-Dinge-Protokoll aufgerufen wird; und
wenn der Betätigungstyp angibt, dass der Benutzer eine mit dem intelligenten Hardwaregerät assoziierten Steuerungsverknüpfung auf der Steuerschnittstelle betätigt, Implementieren (S206) einer Steuerung auf dem intelligenten Hardwaregerät über das Smart-Home-Internet-der-Dinge-Protokoll gemäß einer Betätigung auf der Steuerungsverknüpfung.

2. Verfahren nach Anspruch 1, wobei die erste voreingestellte Betätigung eine lange Drückbetätigung der Bedientaste durch den Benutzer ist, wobei das Verfahren ferner umfasst:
Beobachten, ob der Benutzer die Bedientaste lange drückt; und
wenn ein Langdrückereignis an der Bedientaste beobachtet wird, Feststellen, dass der Benutzer die erste voreingestellte Betätigung an der Bedientaste auf der Sperrbildschirmschnittstelle des Endgeräts durchführt.

3. Verfahren nach Anspruch 1, wobei die erste voreingestellte Betätigung eine Klick-Betätigung an der Bedientaste durch den Benutzer ist, wobei das Verfahren ferner umfasst:
Beobachten, ob der Benutzer die Bedientaste anklickt; und
wenn ein Klickereignis an der Bedientaste beobachtet wird, Feststellen, dass der Benutzer die erste voreingestellte Betätigung an der Bedientaste auf der Sperrbildschirmoberfläche des Endgeräts durchführt.

4. Verfahren nach Anspruch 1, wobei die erste voreingestellte Betätigung eine Schiebebetätigung an der Bedientaste gemäß einer eingestellten Richtung ist, wobei das Verfahren ferner umfasst:
Bestimmen einer Richtung des Verschiebens der Bedientaste durch den Benutzer; und
wenn die Richtung des Verschiebens der Bedientaste mit der eingestellten Richtung übereinstimmt, Feststellen, dass der Benutzer die erste voreingestellte Betätigung an der Bedientaste auf der Sperrbildschirmschnittstelle des Endgeräts durchführt.

5. Verfahren nach Anspruch 1, wobei das Erfassen (S101) von zugehörigen Informationen von mindestens einem intelligenten Hardwaregerät über das voreingestellte Smart-Home-Internet-der-Dinge-Protokoll und das Anzeigen der zugehörigen Informationen auf der Steuerschnittstelle umfasst:
Bestimmen (S201) mindestens einer intelligenten Hardware-Anwendung auf dem Endgerät über das voreingestellte Smart-Home-Internet-der-Dinge-Protokoll;
Erfassen (S202) eines aktuellen Betätigungszustands von mindestens einem intelligenten Hardwaregerät, das von der mindestens einen intelligenten Hardware-Anwendung über das voreingestellte Smart-Home-Internet-der-Dinge-Protokoll gesteuert wird; und
Anzeigen (S203) des mindestens einen intelligenten Hardwaregerätesymbols und des Betätigungszustandes entsprechend jedem intelligenten Hardwaregerät auf der Steuerschnittstelle.

6. Verfahren nach Anspruch 1, wobei das Bestimmen gemäß dem Sicherheitsattribut des Sperrbildschirms, ob die Benutzeroberfläche der intelligenten Hardware-Anwendung, die dem intelligenten Hardwaregerät entspricht, über das Smart-Home-Internet-der-Dinge-Protokoll aufgerufen wird, umfasst:
wenn das Sicherheitsattribut des Sperrbildschirms anzeigt, dass kein Passwort für den Sperrbildschirm durch den Benutzer gesetzt ist, Bestimmen (301), dass die Benutzeroberfläche der intelligenten Hardware-Anwendung, die dem intelligenten Hardwaregerät entspricht, aufgerufen wird;
wenn das Sicherheitsattribut des Sperrbildschirms angibt, dass ein Passwort für den Sperrbildschirm durch den Benutzer gesetzt ist, Anzeigen (S302) einer Popup-Seite, um die Benutzereingabe des Passworts zu empfangen; und
nach dem Empfangen der Benutzereingabe des Passworts auf der Pop-up-Seite, Bestimmen (S303), dass die Benutzeroberfläche der intelligenten Hardware-Anwendung, die dem intelligenten Hardwaregerät entspricht, über das Smart-Home-Internet-der-Dinge-Protokoll aufgerufen wird.

7. Verfahren nach Anspruch 1, wobei das Verfahren ferner umfasst:
Anzeigen (S304) der Benutzeroberfläche der intelligenten Hardware-Anwendung auf der Sperrbildschirmoberfläche und
Steuern (S305) des intelligenten Hardwaregeräts auf der Benutzeroberfläche der intelligenten Hardware-Anwendung.

8. Verfahren nach Anspruch 7, wobei das Steuern des intelligenten Hardwaregeräts auf der Benutzeroberfläche der intelligenten Hardware-Anwendung umfasst:
Erfassen einer Betätigungsanweisung auf der Benutzeroberfläche der intelligenten Hardware-Anwendung durch den Benutzer; und
Senden der Betätigungsanweisung an das intelligente Hardwaregerät über das Smart -Home-Internet-der-Dinge-Protokoll.

9. Verfahren nach Anspruch 1, wobei die Anzeige der zugehörigen Informationen auf der Steuerschnittstelle umfasst:
Bestimmen der Anzeigeparameter der Steuerschnittstelle und
Anzeige der Steuerschnittstelle auf der Sperrbildschirmoberfläche entsprechend den Anzeigeparametern.

10. Vorrichtung zum Implementieren der Steuerung eines intelligenten Hardwaregeräts, die in einem Endgerät enthalten ist, wobei die Vorrichtung umfasst:
ein Erfassungsanzeigemodul (41), das dazu konfiguriert ist, in einem Sperrbildschirmzustand, wenn festgestellt wird, dass ein Benutzer eine erste voreingestellte Betätigung auf einer Bedientaste auf einer Sperrbildschirmschnittstelle des Endgeräts durchführt, zugehörige Informationen von mindestens einem intelligenten Hardwaregerät über ein voreingestelltes Smart-Home-Internet-der-Dinge-Protokoll zu erfassen und die zugehörigen Informationen auf einer Steuerschnittstelle anzuzeigen; und
ein Betätigungssteuermodul (42), das dazu konfiguriert ist, wenn erkannt wird, dass der Benutzer eine zweite voreingestellte Betätigung in Bezug auf das intelligente Hardwaregerät auf der von dem Erfassungsanzeigemodul (41) angezeigten Steuerschnittstelle steuert, eine Steuerung entsprechend der zweiten voreingestellten Betätigung auf dem intelligenten Hardwaregerät über das Smart-Home-Internet-der-Dinge-Protokoll durchzuführen,
wobei das Betätigungssteuermodul umfasst:
ein zweites Bestimmungs-Submodul, das dazu konfiguriert ist, einen Betätigungstyp der zweiten voreingestellten Betätigung zu bestimmen,
ein drittes Bestimmungs-Submodul, das dazu konfiguriert ist, wenn das zweite Bestimmungs-Submodul bestimmt, dass der Betätigungstyp angibt, dass der Benutzer auf ein Symbol für ein intelligentes Hardwaregerät auf der Steuerschnittstelle klickt, gemäß einem Sicherheitsattribut des Sperrbildschirms zu bestimmen, ob eine Benutzerschnittstelle einer intelligenten Hardware-Anwendung, die dem intelligenten Hardwaregerät entspricht, über das Smart-Home-Internet-der-Dinge-Protokoll aufgerufen wird; und
ein Steuerungs-Submodul, das dazu konfiguriert ist, wenn das zweite Bestimmungs-Submodul bestimmt, dass der Betätigungstyp angibt, dass der Benutzer eine Steuerungsverknüpfung, die mit der Intelligente-Hardwaregerät verknüpft ist, auf der Steuerungsschnittstelle bedient, gemäß einer Betätigung an der Steuerungsverknüpfung eine Steuerung auf dem intelligenten Hardwaregerät über das Smart-Home-Internet-der-Dinge-Protokoll zu implementieren.

11. Speichermedium, das von einem Computer lesbar ist und auf dem Anweisungen zum Ausführen der Schritte eines Verfahrens nach einem der Ansprüche 1 bis 9 aufgezeichnet sind.

## Revendications

1. Procédé pour mettre en œuvre la commande d'un dispositif matériel intelligent, qui est mis en œuvre dans un dispositif terminal, le procédé comprend :
dans un état d'écran de verrouillage, lorsqu'il est déterminé qu'un utilisateur réalise une première opération prédéfinie sur une touche de commande sur une interface d'écran de verrouillage du dispositif terminal, l'acquisition (S101) d'informations liées d'au moins un dispositif matériel intelligent via un protocole d'Internet des objets prédéfini intelligent domestique et l'affichage des informations liées sur une interface de commande ; et
lorsqu'il est détecté que l'utilisateur commande une deuxième opération prédéfinie liée au dispositif matériel intelligent sur l'interface de commande, la réalisation (S102) d'une commande correspondant à la deuxième opération prédéfinie sur le dispositif matériel intelligent via le protocole d'Internet des objets domestique intelligent,
dans lequel la réalisation d'une commande correspondant à la deuxième opération prédéfinie sur le dispositif matériel intelligent comprend :
la détermination (S204) d'un type d'opération de la deuxième opération prédéfinie ;
si le type d'opération indique que l'utilisateur clique sur une icône de dispositif matériel intelligent sur l'interface de commande, la détermination (S205), selon un attribut de sécurité de l'écran de verrouillage, précisant si une interface utilisateur de l'application matérielle intelligente correspondant au dispositif matériel intelligent est appelée via le protocole d'Internet des objets domestique intelligent ; et
si le type d'opération indique que l'utilisateur actionne un raccourci de commande associé au dispositif matériel intelligent sur l'interface de commande, la mise en œuvre (S206) selon une opération sur le raccourci de commande, d'une commande sur le dispositif matériel intelligent via le protocole d'Internet des objets domestique intelligent.

2. Procédé selon la revendication 1, dans lequel la première opération prédéfinie est une opération de pression prolongée sur la touche de commande par l'utilisateur, le procédé comprend en outre :
l'observation permettant de savoir si l'utilisateur presse longuement la touche de commande ; et
si un événement de pression prolongée sur la touche de commande est observé, la détermination de la réalisation, par l'utilisateur, de la première opération prédéfinie sur la touche de commande sur l'interface d'écran de verrouillage du dispositif terminal.

3. Procédé selon la revendication 1, dans lequel la première opération prédéfinie est une opération de clic sur la touche de commande par l'utilisateur, le procédé comprend en outre :
l'observation permettant de savoir si l'utilisateur clique sur la touche de commande ; et
si un événement de clic sur la touche de commande est observé, la détermination de la réalisation, par l'utilisateur, de la première opération prédéfinie sur la touche de commande sur l'interface d'écran de verrouillage du dispositif terminal.

4. Procédé selon la revendication 1, dans lequel la première opération prédéfinie est une opération de glissement sur la touche de commande selon une direction définie, le procédé comprend en outre :
la détermination d'une direction de glissement de la touche de commande par l'utilisateur ; et
si la direction de glissement de la touche de commande est conforme à la direction définie, la détermination de la réalisation, par l'utilisateur, de la première opération prédéfinie sur la touche de commande sur l'interface d'écran de verrouillage du dispositif terminal.

5. Procédé selon la revendication 1, dans lequel l'acquisition (S101) d'informations liées d'au moins un dispositif matériel intelligent via le protocole d'Internet des objets prédéfini intelligent domestique et l'affichage des informations liées sur l'interface de commande comprennent :
la détermination (S201) d'au moins une application matérielle intelligente sur le dispositif terminal via le protocole d'Internet des objets prédéfini intelligent domestique ;
l'acquisition (S202) d'un état de fonctionnement actuel d'au moins un dispositif matériel intelligent commandé par l'au moins une application matérielle intelligente via le protocole d'Internet des objets prédéfini intelligent domestique ; et
l'affichage (S203) de l'au moins une icône de dispositif matériel intelligent et de l'état de fonctionnement correspondant à chaque dispositif matériel intelligent sur l'interface de commande.

6. Procédé selon la revendication 1, dans lequel la détermination, selon l'attribut de sécurité de l'écran de verrouillage, précisant si l'interface utilisateur de l'application matérielle intelligente correspondant au dispositif matériel intelligent est appelée via le protocole d'Internet des objets domestique intelligent comprend :
si l'attribut de sécurité de l'écran de verrouillage indique qu'aucun mot de passe n'est défini pour l'écran de verrouillage par l'utilisateur, la détermination (S301) de l'appel de l'interface utilisateur de l'application matérielle intelligente correspondant au dispositif matériel intelligent ;
si l'attribut de sécurité de l'écran de verrouillage indique qu'un mot de passe est défini pour l'écran de verrouillage par l'utilisateur, l'affichage (S302) d'une page intruse pour recevoir une entrée utilisateur du mot de passe ; et
après la réception de l'entrée utilisateur du mot de passe sur la page intruse, la détermination (S303) de l'appel de l'interface utilisateur de l'application matérielle intelligente correspondant au dispositif matériel intelligent via le protocole d'Internet des objets domestique intelligent.

7. Procédé selon la revendication 1, dans lequel le procédé comprend en outre :
l'affichage (S304) de l'interface utilisateur de l'application matérielle intelligente sur l'interface d'écran de verrouillage ; et
la commande (S305) du dispositif matériel intelligent sur l'interface utilisateur de l'application matérielle intelligente.

8. Procédé selon la revendication 7, dans lequel la commande du dispositif matériel intelligent sur l'interface utilisateur de l'application matérielle intelligente comprend :
la détection d'une instruction d'opération sur l'interface utilisateur de l'application matérielle intelligente par l'utilisateur ; et
l'envoi de l'instruction d'opération au dispositif matériel intelligent via le protocole d'Internet des objets domestique intelligent.

9. Procédé selon la revendication 1, dans lequel l'affichage des informations liées sur l'interface de commande comprend :
la détermination de paramètres d'affichage de l'interface de commande ; et
l'affichage de l'interface de commande sur l'interface d'écran de verrouillage selon les paramètres d'affichage.

10. Appareil pour mettre en œuvre la commande d'un dispositif matériel intelligent, qui est inclus dans un dispositif terminal, l'appareil comprend :
un module d'affichage d'acquisition (41) configuré pour, dans un état d'écran de verrouillage, lorsqu'il est déterminé qu'un utilisateur réalise une première opération prédéfinie sur une touche de commande sur une interface d'écran de verrouillage du dispositif terminal, acquérir des informations liées d'au moins un dispositif matériel intelligent via un protocole d'Internet des objets prédéfini intelligent domestique et afficher les informations liées sur une interface de commande ; et
un module de commande d'opération (42) configuré pour, lorsqu'il est détecté que l'utilisateur commande une deuxième opération prédéfinie liée au dispositif matériel intelligent sur l'interface de commande affichée par le module d'affichage d'acquisition (41), réaliser une commande correspondant à la deuxième opération prédéfinie sur le dispositif matériel intelligent via le protocole d'Internet des objets domestique intelligent,
dans lequel le module de commande d'opération comprend :
un deuxième sous-module de détermination configuré pour déterminer un type d'opération de la deuxième opération prédéfinie ;
un troisième sous-module de détermination configuré pour, si le deuxième sous-module de détermination détermine que le type d'opération indique que l'utilisateur clique sur une icône de dispositif matériel intelligent sur l'interface de commande, déterminer, selon un attribut de sécurité de l'écran de verrouillage, si une interface utilisateur de l'application matérielle intelligente correspondant au dispositif matériel intelligent est appelée via le protocole d'Internet des objets domestique intelligent ; et
un sous-module de commande configuré pour, si le deuxième sous-module de détermination détermine que le type d'opération indique que l'utilisateur actionne un raccourci de commande associé au dispositif matériel intelligent sur l'interface de commande, mettre en œuvre, selon une opération sur le raccourci de commande, une commande sur le dispositif matériel intelligent via le protocole d'Internet des objets domestique intelligent.

11. Support de stockage lisible par un ordinateur et sur lequel sont enregistrées des instructions pour exécuter les étapes d'un procédé selon l'une quelconque des revendications 1 à 9.
